# EUROPEAN PATENT SPECIFICATION

(11) **EP 2 241 859 B1**
(45) Date of publication and mention of the grant of the patent: **15.04.2015**
(21) Application number: 10168814.1
(22) Date of filing: 31.12.2007
(51) Int. Cl.: G01C 21/36, G06T 7/00, G06K 9/00

(54) **Improved vehicle navigation system**
Verbessertes Fahrzeugnavigationssystem
Système amélioré de navigation de véhicule

(43) Date of publication of application: 20.10.2010
(62) Divisional of application: 07025242.4
(73) Proprietor: STMicroelectronics Application GmbH, 85609 Aschheim (DE); STMicroelectronics GmbH, 85609 Aschheim-Dornach (DE)
(72) Inventor: Stockinger, Josef, 85757, Karlsfeld (DE); Blohm, Michael, 30629, Hannover (DE)
(74) Representative: Bosotti, Luciano

(56) References cited:
- EP-A1- 0 782 118
- WO-A1-2006/109527
- WO-A1-2007/119472
- WO-A1-2007/129382
- JP-A- 11 108 684

## Description

### Field of application

The present invention generally relates to a vehicle navigation system and to a related method.

More in particular, but not exclusively, the present invention relates to a GPS navigation system and method.

### Prior art

As it is well known, vehicle navigation systems are capable to guide a vehicle driver showing him/her maps and drive information or suggestion through an electronic display.

Normally, traditional and known vehicle navigation systems of the socalled GPS type rely on an antenna installed on or in the vehicle and capable to pick up electromagnetic waves transmitted from satellites sources, in order to define the exact position of the vehicle. The so defined position is compared with known geographical information by a microprocessor that is able to access to a navigation database and to associate the defined position of the vehicle with the corresponding street wherein the vehicle is driving.

Software means are also provided, in order to process information provided by the vehicle driver and to guide him/her from a starting location to an ending location as well as to supervise the route decided by the driver in real-time.

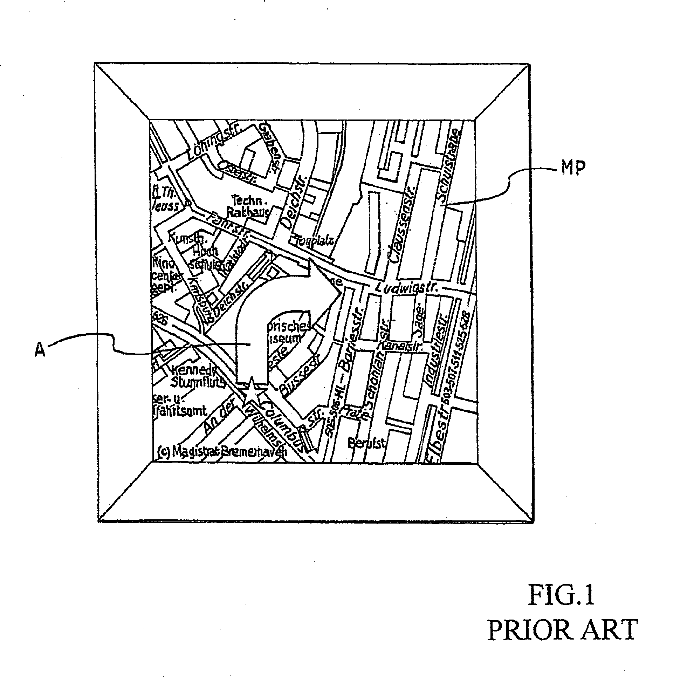

Such navigation systems usually comprise output means encompassing an electronic display and an automatic vocal reader notifying to the driver the actions to be taken. An example of a display use in this field is shown in Fig.1, wherein the driving information are displayed in the form of a map MP with the addition of an arrow A, indicating the action to be taken, i.e. that the vehicle driver is supposed to turn right in some time in order to reach the indicated ending location, as calculated by the software means of the navigation system connected to the display. Future navigation systems will use stored three-dimensional maps and satellite recordings, e.g. Google Earth or TeleAtlas to give better guidance to the driver. A target of these navigation systems is to avoid confusion of the driver by pictorial maps, so that the vehicle driver has to understand and mentally transform the received information to the actual road situation. It is evident that a map such as the one shown in Fig. 1 is not so easy and immediate to be understood.

All recorded and stored maps also have another main problem, that due to construction or other circumstances (plants growing), the real road situation may have changed since the last recoding of such maps. So, the information displayed to the vehicle driver could not be updated and thus could be substantially unreadable or not understandable when compared with the real situation that the driver is watching.

Navigation systems and methods using live pictures in order to facilitate the driver comprehension of the route to be followed are known for instance by the PCT applications No. WO 2007/129382, No. WO 2007/119472 and No. WO 2006/109527 as well as from the Japanese patent application No. 11 108684.

The problem underlying the present invention is that of providing a system and a method for better guiding a vehicle driver with respect to the performance of the traditional navigation systems and methods.

In particular, an aim of the invention is that of providing a more natural and understandable outputs for the vehicle driver understanding.

### Summary of the invention

The solution idea underlying the present invention is that of displaying a navigation direction indicator, as calculated by the navigator system, into a real scene captured by a vehicle caméra.

Such problem has been solved, according to the invention, by a system having the features claimed in claim 1.

The above-mentioned problem is further solved, according to the invention, by a method having the features claimed in claim 5.

Preferred embodiments of the device and of the method according to the present invention are described in the dependent claims.

Further features and the advantages of the system and method of the invention will be appreciated by the following description of preferred embodiments here provided for illustrative and non-limiting purposes with reference to the enclosed figures.

### Brief description of the figures

Figure 1 is a schematic representation of a driving information as displayed according to a traditional or known navigation system;
Figure 2A schematically shows a vehicle including a navigation system according to the invention;
Figure 2B shows a block scheme of the components of the system according to the invention;
Figure 3 shows a flow chart concerning the method steps performed by the system according to the invention;
Figure 4 shows a digital picture as recorded by a digital camera associated to the system according to the invention;
Figure 5 shows the digital picture of Figure 4 further including a driving information, for instance as display output of the system according to the invention; and
Figure 6 shows a flow chart concerning a calibration process for a digital camera associated to the system according to the invention.

### Detailed description of the invention

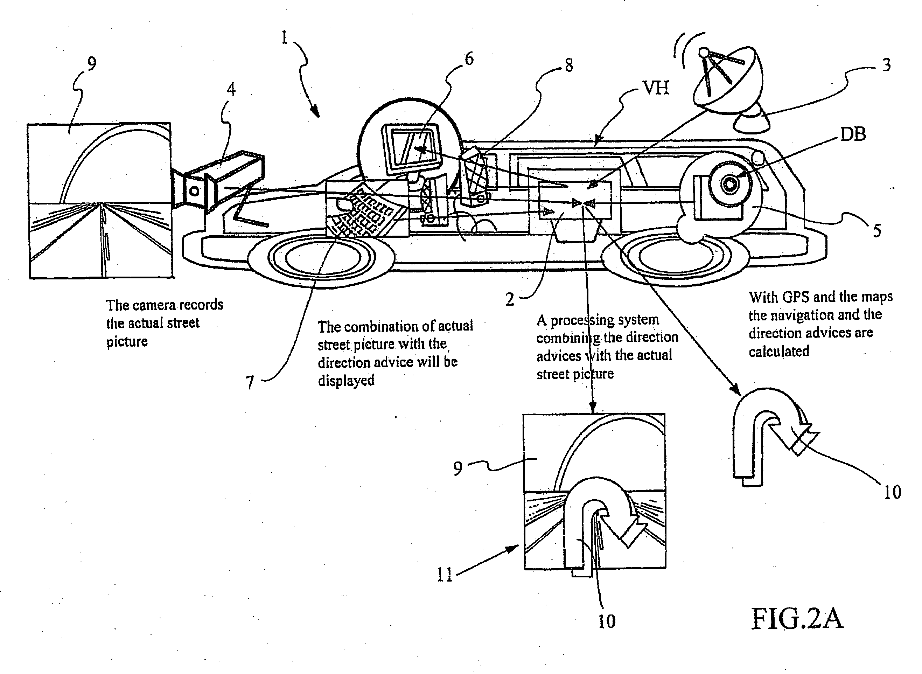

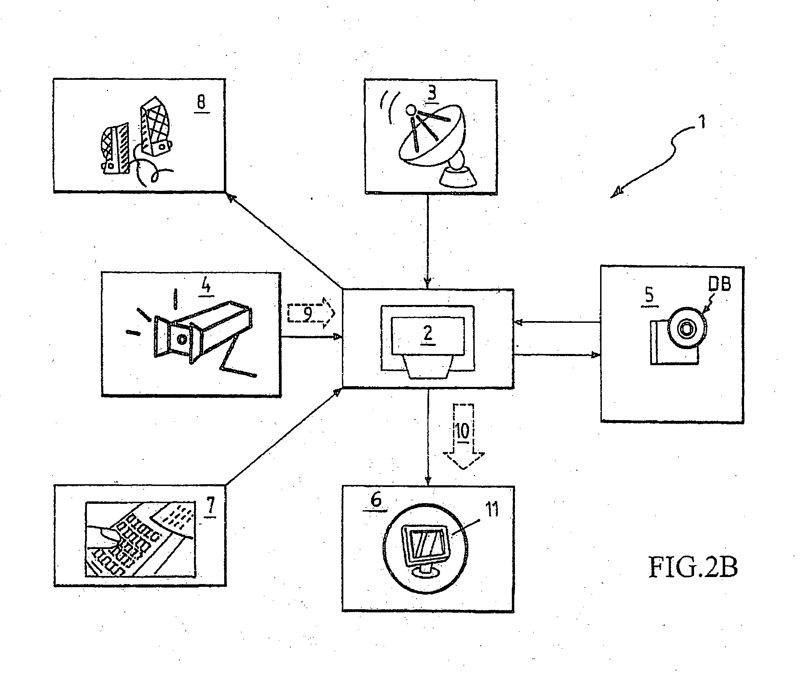

With particular reference to Fig. 2A and 2B, a vehicle navigation system 1 according to the present invention is schematically shown.

The vehicle navigation system may be incorporated or associated to a standard vehicle VH or car for providing to the vehicle driver pertinent guiding or driving information corresponding to a track or route that the vehicle driver needs to move along.

The vehicle navigation system 1 comprises:
- an electronic controller or processor unit 2;
- receiving means, in particular a GPS or GPRS antenna 3, connected to the electronic controller 2; antennas compatible with other receiving standards might be used as well;
- a camera 4, connected to the electronic controller 2 structured for recording an actual situation or real scene in front of the vehicle VH, in particular a car, equipped with the system 1. The camera is a digital camera; however the use of a standard analog camera cannot be excluded. The camera is provided with a lens designed to catch the scene according to an angular point of view that is corresponding to the vehicle driver's view;
- a memory device 5, accessible to the electronic controller 2 and comprising a navigation database DB (being illustrated and discussed below in more detail) which encompasses the structure of the streets (for structure of the streets, road signs and the layout of the lanes are intended);
- displaying means, in particular an LCD monitor 6, connected to the electronic controller 2 through a video interface;
- a speaker, in particular a digital audio speaker 8, connected to the electronic controller 2; and
- a user interface 7 or keyboard, connected to the electronic controller 2, by means of which the user inputs commands and/or information.

In particular, an user can edit, by using the keyboard or similar means of the user interface 7, an ending or final location to be reached and the system 1 shows the route to such an ending location from a starting location, as calculated by the electronic means 2 starting from data obtained by the antenna 3.

According to a different embodiment, the memory device 5 could be also internal or embedded into the electronic controller 2.

The electronic controller 2, as will be more clearly explained in the following description, calculates in real-time a route to be followed by the vehicle VH, starting from an actual position thereof in order to reach the ending location, and provides a driving direction indicator, for instance in the form of an arrow 10.

Advantageously, the system 1 displays the driving direction indicator or arrow 10 onto the real scene 9 as captured by the digital camera 4 of the vehicle VH, thus forming a real scene based driving information 11.

In this way, the driver will see exactly the same situation on his LCD monitor 6, that he can see looking out of the windscreen of his vehicle VH. The real scene 9 as captured by the digital camera 4, along with the arrow 10 added thereto, i.e. the real scene based driving information 11, may also be projected directly to the windscreen as a perfect head up display.

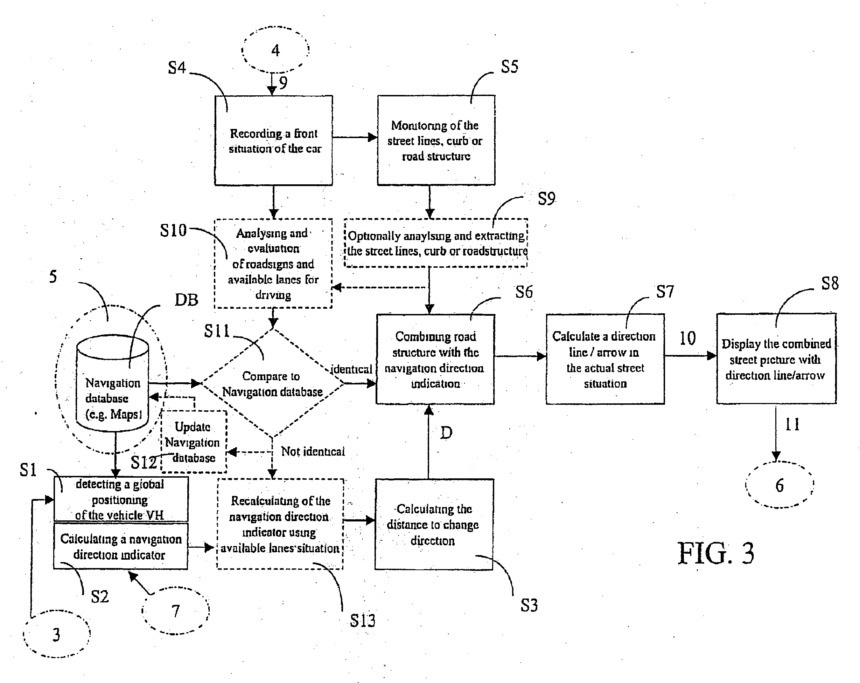

In order to provide the above explained driving information to the driver, the electronic controller 2, by means of an embedded microprocessor which is not illustrated in the figures, executes a series of process or method steps for providing a real scene based driving information 11 according to the present invention which is schematically illustrated in Fig. 3.

So, according to one embodiment, a vehicle navigation system 1 comprises:
- an antenna 3 structured to receive electromagnetic waves transmitted by satellites,
- an electronic controller 2 or computer executing a software program detecting the global position of the vehicle on the basis of said electromagnetic waves received by the antenna 3;
- a memory 5 connected to said electronic controller 2 and containing a navigation database including electronic maps;
- a display 6 connected to outputs of said electronic controller 2 for presenting guide advices 10 to the vehicle driver according to the exact road position of said vehicle computed with reference to said electronic maps; and
- a camera 4 installed on the vehicle to provide on said display 6 an instant and live picture of the landscape view currently seen by the vehicle driver.

Advantageously, said camera 4 is a digital camera and said guide advices include at least a directional arrow 10.

Moreover, said live picture is stored in digital format inside a portion of said memory 5 is refreshed in said memory portion 5 according to a time schedule of few micro-seconds.

The software program is endowed with algorithms capable to recognize lanes and lane limits in said digital pictures and to display said at least an arrow 10 within said lane limits. Also road barriers and other obstacles are detected in order to force the system to recalculate the driving advices.

The software program is further able to process and compare said digital pictures provided by said camera 4 with digital pictures pre-stored in said memory 5 and, in case of discrepancy, replacing said pre-stored digital pictures with said digital pictures provided by said camera.

The algorithms are capable to recognize road traffic signs and to notify pictorial guide advices 10 according to said road traffic signs.

Focusing now the attention on the method provided, such a method is provided for helping and guiding the vehicle driver through the navigation system 1 and comprises the following steps:
- detecting a global positioning of the vehicle through an antenna structured to receive electromagnetic waves transmitted by satellites and an electronic controller of said navigation system;
- comparing said global position with road maps pre-stored in a memory of the system to define the road position of said vehicle with respect to said maps,
- recording an instant and live picture of the landscape view currently seen by the vehicle driver by a camera installed on the vehicle;
- displaying on a display of said system said instant and live picture together with guide advices for the vehicle driver according to the exact road position of said vehicle computed with reference to said maps.

A digital camera is used for recording instant and live pictures.

More specifically, the method steps are the following:
- S1: detecting a global positioning of the vehicle VH by means of the antenna 3, either according to the GRP or GPRS standard, and comparing this global position with pre-stored road maps (included into the navigation database DB of the memory device 5) in order to define a road position of the vehicle VH in one of such pre-stored road maps;
- S2: calculating in real-time a route to be followed by the vehicle VH on the basis of its actual road position and of an ending location as received by the user interface 7 and providing a navigation direction indicator; and
- S3: optionally calculating a distance D before a next direction change of the vehicle VH.

Advantageously, the method also comprises the steps of:
- S4: obtaining a picture from the digital camera 4 corresponding to the real scene 9 in front of the driver and storing such a picture in an appropriate format; as an alternative, the picture may simply be transmitted as it is to the monitor 6 and presented to the user as a direct reproduction of the view in front of him/her;
- S5: processing said picture so that the streets lines, curbs and road structure are analyzed;
- S6: combining the analyzed road structure with the navigation direction indicator and with the calculated distance D;
- S7 calculating the driving direction indicator 10 in the form of a line or an arrow with respect to the real scene 9 comprising the actual street situation as captured by the digital camera 4; and
- S8: displaying on the LCD display 6 the combined real scene 9 with the line/arrow 10 as calculated, i.e. the real scene based driving information 11.

In particular, the format of the pictures 9 could be, e.g. JPG, MPEG, DIVX, BMP; the pictures being stored in the memory device 5 or in a dedicated RAM memory, not shown since conventional.

In another embodiment of the method, it further comprises the steps of:
- S9: analysing and extracting the street lines, curb or road structure starting from the real scene 9;
- S10: analysing and evaluating the road signs and available lanes for driving; and
- S 11: comparing the structure of the street as evaluated by the step S10 (starting by the picture as taken by the digital camera 4) with a structure of the same street as stored in the Navigation database DB (in a preliminary phase, e.g. during the installation of the software program of the navigator system).

In particular, the pictures as taken by the digital camera 4 are processed to detect lane limits (e.g. by the so called "mobile eye" systems).

Advantageously, in case of a not identical result of such comparison step S11, i.e. in case the real situation of a street does not correspond to the pre-stored one as reported in the Navigation database DB, the method further comprises the steps of:
- S12: updating the Navigation database DB by recording the new structure of the street; and
- S13: recalculating the driving direction indicator 10 using the results (evaluated road signs and available lanes for driving) of step S10.

In this case, the optional step S3 of calculating a distance D before a next direction change of the vehicle VH will be based on the driving direction indicator 10 as recalculated in step S13.

In such a way, in case a road has been blocked for driving momentarily or permanently, a new route to be driven is immediately calculated and the corresponding driving direction indicator 10 displayed to the user.

It should be noted that improved software analyzing and evaluating means can future assist the driver, allowing to detect road traffic signs like one way road, road not allowed for driving and so on.

In this case, even if the above explained step S12 of updating the Navigation database DB by recording the new structure of the street is not performed, the mismatch between the stored situation and the captured one due to momentarily legally usable roads (for instance, when a road is blocked by changed traffic signaling), a new driving direction indicator 10 is in any case calculated in step S13 and the alternative is displayed to the user to correctly drive him.

The method further comprises a calibration phase of the digital camera 4, in turn including the following steps:

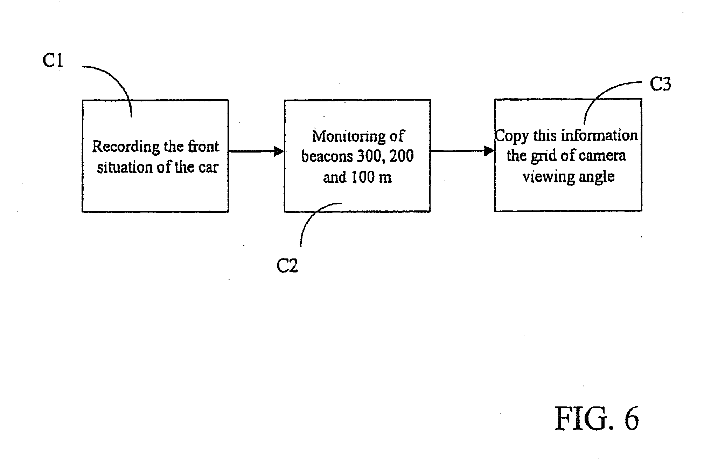

In the Fig. 6 is possible to see the calibration process 30 of the digital camera 4, comprising:
   - recording pictures of outside the vehicle (C1);
   - monitoring beacons from different distances, e.g. 100 m, 200 m and 300 m (C2);
   - copying the information so obtained to the grid of the camera viewing angle in order to calibrate it (C3).

Detection can also be done as being based on the yard information; for instance the beacons from distances are given in miles or yards. The system for calibration is the same; only the indicators are provided with different value.

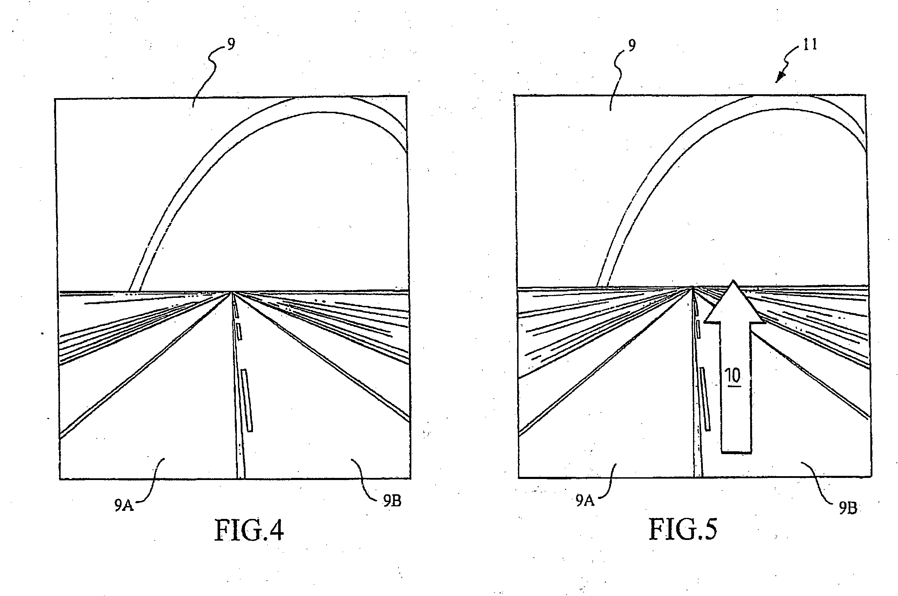

Figure 4 shows a picture corresponding to a real scene 9 as captured by the digital camera 4, while Figure 5 shows the real scene based driving information 11 as provided by the navigator system according to the present invention onto its display 6, in particular comprising the driving direction indicator 10 in the form of a straight arrow superposed to the real scene 9.

As previously explained, such straight arrow 10 has been calculated in step S7. It is clear that more complex pictorials can be used and displayed, when needed.

A simple comparison with the prior art displaying as shown in Figure 1, it is possible to appreciate the simplicity and fully understandability of the real scene based driving information 11 provided by the vehicle navigation system 1 according to the invention with respect to the traditional ones.

Moreover, advantageously, having the vehicle navigation system 1 already processed the road structure and thus recognized the lanes 9A and 9B, the displayed real scene based driving information 11 is further improved by correctly positioning the driving direction indicator 10 onto line 9B, along which vehicle has to go.

In other words, the detected lanes and lane limits in step S7 are used to center the driving direction indicator 10 as calculated by the of the vehicle navigation system 1 inside the picture as taken by the digital camera 4 and correctly show the real scene based driving information 11 on the display 6.

The invention has the great advantage to suggest the use of a camera installed on the car in addition to the map information coming from a memory unit. The camera is easy to install on the car.

The method provides for combining the information from the map to the detection of the car motion. The system will output to a screen the correct direction to be taken so that it is much easier for the driver to understand the correct direction.

## Claims

1. A vehicle navigation system (1) comprising:
an antenna (3) structured to receive electromagnetic waves transmitted by satellites,
an electronic controller (2) a software program configured to execute detecting the global position of the vehicle on the basis of said electromagnetic waves received by the antenna (3);
a memory (5) connected to said electronic controller (2) and containing a navigation database (6) including electronic maps;
a display (6) connected to outputs of said electronic controller (2); and
a camera (4) installed on the vehicle to provide on said display (6) an instant and live picture of the landscape view currently seen by the vehicle driver;
said display (6) being able to present pictorial guide advices (10), which include at least a directional arrow, to the vehicle driver according to the exact road position of said vehicle computed with reference to said electronic maps;
said software program is endowed with algorithms capable to recognize lanes and lane limits in said live pictures (25) in order to recalculate and to display said at least a pictorial guide advice (10) within said lane limits, and
said vehicle navigation system (1) being **characterized in that**
said software program is configured to, starting by the picture as taken by the camera (4), analyze and evaluate the road traffic signs and available lanes for driving and force a recalculation of said at least a pictorial guide advice (10) based on said analyzed and evaluated road traffic signs and available lanes for driving, said software program being also able to display said at least a pictorial guide advice (10) as recalculated.

2. A system according to claim 1, **characterized in that** said live picture is stored in digital format inside a portion of said memory (5).

3. A system according to claim 2, **characterized in that** said software program is able to process and compare said live picture provided by said camera (4) with digital pictures pre-stored in said memory (5) and, in case of discrepancy, replace said pre-stored digital pictures with said live pictures provided by said camera (4).

4. A system according to claims 1 or 2, **characterized in that** said live picture is stored as digital picture in digital format inside a portion of said memory (5).

5. A navigation method for helping and guiding vehicle driver through navigation system and comprising the following steps of:
detecting a global positioning of the vehicle through an antenna (3) structured to receive electromagnetic waves transmitted by satellites and an electronic controller (2) of said navigation system; and
comparing said global position with road maps pre-stored in a memory (5) of the system to define the road position of said vehicle with respect to said maps,
recording an instant and live picture of the landscape view currently seen by the vehicle driver by a camera (4) installed on the vehicle; and
displaying on a display (6) of said system said instant and live picture together with pictorial guide advices (10), which include at least a directional arrow, for the vehicle driver according to the exact road position of said vehicle computed with reference to said maps,
it further comprises, performed by an algorithm running in said controller, the steps of:
- recognizing lanes and lane limits (12, 13, 14) in said live pictures, recalculating and displaying said at least a pictorial guide advices (10) within said lane limits;
**characterized in that** the algorithm running in said controller further performs the steps of:
- analysing and evaluating, starting by the picture as taken by the camera, the road traffic signs and available lanes for driving,
- forcing a recalculation of said at least a pictorial guide advice (10) using the results of said step of analyzing and evaluating, and
- displaying said at least a pictorial guide advice (10) as recalculated.

6. A method according to claim 5, wherein a digital camera (4) is used for recording instant and live pictures.

## Patentansprüche

1. Fahrzeugnavigationssystem (1), aufweisend:
eine Antenne (3), die dafür strukturiert ist, von Satelliten gesendete elektromagnetische Wellen zu empfangen;
eine elektronische Steuereinrichtung (2), die dafür konfiguriert ist, ein Softwareprogramm auszuführen, das die globale Position des Fahrzeugs auf der Grundlage der von der Antenne (3) empfangenen elektromagnetischen Wellen detektiert;
einen Speicher (5), der mit der elektronischen Steuereinrichtung (2) verbunden ist und eine Navigationsdatenbank (16) umfasst, die elektronische Straßenkarten enthält;
eine Anzeigevorrichtung (6), die mit Ausgängen der elektronischen Steuereinrichtung (2) verbunden ist; und
eine Kamera (4), die an dem Fahrzeug installiert ist, um auf der Anzeigevorrichtung (6) ein Sofort- und Live-Bild der vom Fahrzeugführer gegenwärtig zu sehenden Landschaftsansicht zu liefern;
wobei die Anzeigevorrichtung (6) dazu in der Lage ist, dem Fahrzeugführer entsprechend der genauen Straßenposition des Fahrzeugs, die mit Bezug auf die elektronischen Straßenkarten berechnet wurde, bebilderte Führungsempfehlungen (10) anzuzeigen, die mindestens einen Richtungspfeil umfassen;
wobei das Softwareprogramm mit Algorithmen ausgestattet ist, die dazu in der Lage sind, Spuren und Spurenbegrenzungen auf den Livebildern (25) zu erkennen, um wenigstens eine bebilderte Führungsempfehlung (10) innerhalb der Spurbegrenzungen erneut zu berechnen und anzuzeigen,
wobei das Fahrzeugnavigationssystem (1) **dadurch gekennzeichnet ist, dass** das Softwareprogramm dafür konfiguriert ist, ausgehend von dem von der Kamera (4) aufgenommenen Bild die Straßenverkehrszeichen und die zum Fahren verfügbaren Spuren zu analysieren und auszuwerten und auf Grundlage der analysierten und ausgewerteten Straßenverkehrszeichen und zum Fahren verfügbaren Spuren eine Neuberechnung der wenigstens einen bebilderten Führungsempfehlung (10) zu erzwingen, wobei das Softwareprogramm außerdem dazu in der Lage ist, die wenigstens eine neu berechnete bebilderte Führungsempfehlung (10) anzuzeigen.

2. System nach Anspruch 1, **dadurch gekennzeichnet, dass** das Livebild in digitalem Format in einem Bereich des Speichers (5) gespeichert wird.

3. System nach Anspruch 2, **dadurch gekennzeichnet, dass** das Softwareprogramm dazu in der Lage ist, die von der Kamera (4) gelieferten Live-Bilder zu verarbeiten und mit in dem Speicher (5) vorgespeicherten digitalen Bildern zu vergleichen und die vorgespeicherten digitalen Bilder im Fall einer Diskrepanz durch die von der Kamera (4) gelieferten Live-Bilder zu ersetzen.

4. System nach Anspruch 1 oder 2, **dadurch gekennzeichnet, dass** das Livebild als digitales Bild in digitalem Format in einem Bereich des Speichers (5) gespeichert wird.

5. Navigationsverfahren zur Unterstützung und Führung eines Fahrzeugführers durch ein Navigationssystem, wobei das Verfahren folgende Schritte beinhaltet:
Detektieren einer globalen Position des Fahrzeugs durch eine Antenne (3), die dafür strukturiert ist, von Satelliten gesendete elektromagnetische Wellen zu empfangen, und durch eine elektronische Steuereinrichtung (2) des Navigationssystems; und
Vergleichen der globalen Position mit in einem Speicher (5) vorgespeicherten Straßenkarten des Systems, um die Straßenposition des Fahrzeugs mit Bezug auf die Straßenkarten zu definieren;
Aufzeichnen eines Sofort- und Livebildes der von dem Fahrzeugführer gegenwärtig zu sehenden Landschaftsansicht durch eine in dem Fahrzeug installierte Kamera (4);
Anzeigen des Sofort- und Livebildes zusammen mit bebilderten Führungsempfehlungen (10), die wenigstens einen Richtungspfeil umfassen, auf einer Anzeigevorrichtung (6) des Systems für den Fahrzeugführer entsprechend der mit Bezug auf die Straßenkarten berechneten genauen Straßenposition des Fahrzeugs;
wobei das Verfahren ferner folgende Schritte beinhaltet, ausgeführt von einem Algorithmus, der in der Steuereinrichtung läuft:
- Erkennen von Spuren und Spurenbegrenzungen (12, 13, 14) auf den Livebildern, Neuberechnen und Anzeigen der wenigstens einen bebilderten Führungsempfehlung (10) innerhalb der Spurenbegrenzungen;
**dadurch gekennzeichnet, dass** der in der Steuereinrichtung laufende Algorithmus ferner folgende Schritte ausführt:
Analysieren und Auswerten der Straßenverkehrszeichen und der zum Fahren verfügbaren Spuren ausgehend von dem von der Kamera aufgenommenen Bild;
- Erzwingen einer Neuberechnung der wenigstens einen bebilderten Führungsempfehlung (10) unter Verwendung der Ergebnisse des Schrittes des Analysierens und Auswertens, und
- Anzeigen der wenigstens einen neu berechneten bebilderten Führungsempfehlung (10).

6. Verfahren nach Anspruch 5, wobei eine digitale Kamera (4) dazu verwendet wird, Sofort- und Live-Bilder aufzuzeichnen.

## Revendications

1. Système de navigation de véhicule (1) comprenant :
une antenne (3) structurée pour recevoir des ondes électromagnétiques transmises par des satellites,
un contrôleur électronique (2) configuré pour exécuter un programme informatique qui détecte la position globale du véhicule d'après lesdites ondes électromagnétiques reçues par l'antenne (3) ;
une mémoire (5) connectée audit contrôleur électronique (2) et contenant une base de données de navigation (16) comprenant des cartes routières électroniques ;
un écran (6) connecté à des sorties dudit contrôleur électronique (2) ; et
une caméra (4) installée sur le véhicule pour fournir sur ledit écran (6) une image instantanée et réelle de la vue de paysage qui est vue par le conducteur du véhicule ;
ledit écran (6) étant apte à présenter des conseils de guidage en images (10), qui comprennent au moins une flèche directionnelle, au conducteur du véhicule selon la position routière exacte dudit véhicule calculée par rapport auxdites cartes routières électroniques ;
ledit programme informatique est pourvu d'algorithmes capables de reconnaître des voies et des limites de voies dans lesdites images réelles (25) afin de recalculer et d'afficher ledit au moins un conseil de guidage en image (10) dans lesdites limites de voies, et
ledit système de navigation de véhicule (1) étant **caractérisé en ce que** ledit programme informatique est configuré pour, à partir de l'image prise par la caméra (4), analyser et évaluer les signaux de trafic routier et les voies disponibles pour rouler et forcer un recalcul dudit au moins un conseil de guidage en image (10) basé sur lesdits signaux de trafic routier analysés et évalués et les voies disponibles pour rouler, ledit programme informatique étant aussi apte à afficher ledit au moins un conseil de guidage en image (10) après le recalcul.

2. Système selon la revendication 1, **caractérisé en ce que** ladite image réelle est mémorisée sous un format numérique à l'intérieur d'une partie de ladite mémoire (5).

3. Système selon la revendication 2, **caractérisé en ce que** ledit programme informatique est apte à traiter et comparer ladite image réelle fournie par ladite caméra (4) avec des images numériques préalablement mémorisées dans ladite mémoire (5) et, en cas de divergence, remplacer lesdites images numériques préalablement mémorisées par lesdites images réelles fournies par ladite caméra (4).

4. Système selon la revendication 1 ou 2, **caractérisé en ce que** ladite image réelle est mémorisée en tant qu'image numérique sous un format numérique à l'intérieur d'une partie de ladite mémoire (5).

5. Procédé de navigation pour aider et guider un conducteur de véhicule dans un système de navigation et comprenant les étapes suivantes :
détecter un positionnement global du véhicule par l'intermédiaire d'une antenne (3) structurée pour recevoir des ondes électromagnétiques transmises par des satellites et un contrôleur électronique (2) dudit système de navigation ; et
comparer ladite position globale avec des cartes routières préalablement mémorisées dans une mémoire (5) du système pour définir la position routière dudit véhicule par rapport auxdites cartes,
enregistrer une image instantanée et réelle de la vue de paysage vue par le conducteur du véhicule au moyen d'une caméra (4) installée sur le véhicule ; et
afficher sur un écran (6) dudit système ladite image instantanée et réelle en même temps que des conseils de guidage en images (10), qui comprennent au moins une flèche directionnelle, pour le conducteur du véhicule selon la position routière exacte dudit véhicule calculée relativement auxdites cartes,
dans lequel il comprend en outre, exécutées par un algorithme fonctionnant dans ledit contrôleur, les étapes suivantes :
- reconnaître des voies et des limites de voies (12, 13, 14) dans lesdites images réelles, recalculer et afficher lesdits au moins un conseil de guidage en image (10) dans lesdites limites de voies ;
**caractérisé en ce que** l'algorithme fonctionnant dans ledit contrôleur exécute en outre les étapes suivantes :
- analyser et évaluer, à partir de l'image prise par la caméra, les signes de trafic routier et les voies disponibles pour rouler,
- forcer un recalcul dudit au moins un conseil de guidage en image (10) en utilisant les résultats de ladite étape d'analyse et d'évaluation, et
- afficher ledit au moins un conseil de guidage en image (10) après le recalcul.

6. Procédé selon la revendication 5, dans lequel on utilise une caméra numérique (4) pour enregistrer des images instantanées et réelles.
